# EUROPÄISCHE PATENTSCHRIFT

(11) **EP 3 966 493 B1**
(45) Veröffentlichungstag und Bekanntmachung des Hinweises auf die Patenterteilung: **20.08.2025**
(21) Anmeldenummer: 20719988.6
(22) Anmeldetag: 15.04.2020
(51) Int. Cl.: F21S 4/28, F21S 10/00, F21V 17/16, F21V 19/00

(54) **LÄNGLICHE LEUCHTE**
ELONGATED LAMP
LAMPE ALLONGÉE

(30) Priorität: 06.05.2019 DE 102019111593
(43) Veröffentlichungstag der Anmeldung: 16.03.2022
(73) Patentinhaber: Zumtobel Lighting GmbH, 6850 Dornbirn (AT)
(72) Erfinder: CERV, Simon, 6850 Dornbirn (AT); GALLER, Gerhard, 6900 Bregenz (AT); KRAMPL, Yannick, 6850 Dornbirn (DE)
(74) Vertreter: Kiwit, Benedikt
(86) Internationale Anmeldenummer: PCT/EP2020/060546
(87) Internationale Veröffentlichungsnummer: WO 2020/224922

(56) Entgegenhaltungen:
- WO-A1-2014/069791
- KR-B1- 101 759 051
- US-A1- 2018 306 971

## Beschreibung

Die vorliegende Erfindung betrifft eine längliche Leuchte mit einem länglichen Leuchtenträger, der ein Leuchtmittel trägt, welches in einen Lichtleiter der länglichen Leuchte stirnseitig einstrahlt.

Grundsätzlich sind solche länglichen Leuchten bekannt. Um eine genaue Einkopplung des von dem Leuchtmittel abgegeben Lichts in den Lichtleiter zu bewerkstelligen, ist eine sehr zeitaufwendige Befestigung des Leuchtmittels - beispielsweise der Platinen von LED-Modulen - sowie des zugehörigen Lichtleiters erforderlich. In der Regel werden beispielsweise Platinen derartiger Leuchtmittel angeschraubt oder mit Klemmleisten oder Klemmspangen aufwendig und individuell definiert fixiert. Der Lichtleiter wird in einem separaten Schritt ebenfalls sehr aufwendig und individuell positioniert und befestigt.

Ferner ist aus der US 2018/306971 A1 eine längliche Leuchte bekannt, bei der die Leuchtmittel bezogen auf eine Längsrichtung der Leuchte stirnseitig angeordnet sind und sich orthogonal zur Längsrichtung erstrecken, um Licht in einen Lichtleiter einzukoppeln. Die Befestigung der Leuchtmittel bezüglich stirnseitig bereitgestellter Leuchtenträger erfolgt dabei teilweise durch einen als elastisches Element umgesetzten elektrischen Kontakt, über den das Leuchtmittel auch mit Strom versorgt wird.

Weitere Ausführungen von Leuchten, bei denen stirnseitig Licht eines Leuchtmittels in einen Lichtleiter eingekoppelt werden, sind aus der KR 101 759 051 B1 und WO 2014/069791 A1 bekannt.

Es ist nunmehr eine Aufgabe der vorliegenden Erfindung, die Befestigung und Positionierung von Leuchtmittel einerseits und Lichtleiter andererseits bezüglich des Leuchtenträgers sowie relativ zueinander zu vereinfachen.

Diese Aufgabe wird durch den Gegenstand des unabhängigen Anspruchs gelöst. Die abhängigen Ansprüche bilden den zentralen Gedanken der vorliegenden Erfindung in besonders vorteilhafter Weise weiter.

Gemäß einem Aspekt betrifft die vorliegende Erfindung eine längliche Leuchte. Diese weist einen länglichen Leuchtenträger auf, welcher sich entlang einer Längsachse (also eine Längsachse des Leuchtenträgers bzw. der länglichen Leuchte) erstreckt, wobei der Leuchtenträger eine sich entlang der Längsachse erstreckende Anlagefläche aufweist. Die längliche Leuchte weist ferner ein längliches Leuchtmittel mit einer Hauptabstrahlrichtung auf, wobei sich das Leuchtmittel entlang der Längsachse erstreckt, um an der Anlagefläche anzuliegen. Ferner weist die längliche Leuchte einen länglichen Lichtleiter mit einem dem Leuchtmittel zugewandten (bevorzugt länglichen) stirnseitigen Einkoppelbereich zum Einkoppeln des von dem Leuchtmittel abgegebenen Lichts sowie einem Auskoppelbereich zur Abgabe des über den Einkoppelbereich eingekoppelten Lichts. Schließlich weist die längliche Leuchte ein Federelement auf, welches derart in dem Leuchtenträger eingespannt ist, um das Leuchtmittel an die Anlagefläche zu drücken und (bevorzugt bezüglich des Lichtleiters) derart auszurichten, dass der stirnseitige Einkoppelbereich dem Leuchtmittel in Hauptabstrahlrichtung gesehen gegenüberliegt, um von dem Leuchtmittel in der Hauptabstrahlrichtung abgegebenes Licht über den stirnseitigen Einkoppelbereich in den Lichtleiter einzukoppeln. Das Federelement ist dabei lösbar an unterschiedlichen Stellen des Leuchtenträgers einspannbar.

Unter "länglich" wird im Rahmen der vorliegenden Erfindung verstanden, dass die Ausdehnung bzw. Dimension entlang der Längserstreckung bevorzugt um ein vielfaches größer ist als die Ausdehnungen bzw. Dimensionen insbesondere quer dazu.

Mittels des erfindungsgemäßen Federelements wird es vorliegend ermöglicht, einerseits das Leuchtmittel bezüglich des Leuchtenträgers sicher zu positionieren und andererseits das Leuchtmittel relativ zum Lichtleiter definiert auszurichten. Es ist somit möglich, mittels nur noch einer einzigen Komponente das Leuchtmittel an dem Leuchtenträger und bezüglich des Lichtleiters definiert zu positionieren. Somit kann die Montage einer derartigen länglichen Leuchte deutlich vereinfacht werden. Da zudem das notwendige Federelement bevorzugt eine einzige, integrale Komponente ist, können zudem für die Montage und Ausrichtung notwendige Bauteile und Arbeitsschritte und somit insgesamt die Kosten für Herstellung und Montage deutlich reduziert werden.

Das lösbar bereitgestellte bzw. eingespannte Federelement kann folglich wahlweise eingesetzt, entnommen und an unterschiedlichen Stellen positioniert werden, welche Anforderungen auch immer an die längliche Leuchte gestellt werden. Das Federelement ist bevorzugt aus einem Kunststoff hergestellt. Besonders bevorzugt kann das Federelement somit als Schüttgutteil bereitgestellt werden. Da es bevorzugt nur noch das eine Bauteil zur Montage und Ausrichtung von Leuchtmittel zu Lichtleiter gibt, kann somit die Anzahl der notwendigen Schüttgutteile ebenso reduziert und eine Montage deutlich vereinfacht werden. Insbesondere vorteilhaft ist zudem die werkzeuglose Montage und Demontage des Federelements und folglich bevorzugt der damit montierten und ausgerichteten Bauteile. Des Weiteren kann aufgrund der eindeutigen definierten Positionierung mit Hilfe des Federelements bezüglich des Leuchtmittels zu dem Leuchtenträger beispielsweise auch die Erfüllung der Norm für Luft- und Kriechstrecken durch die definierte Positionierung gewährleistet werden.

Die Anlagefläche erstreckt sich im Wesentlichen in einer Erstreckungsebene flächig. Das Leuchtmittel liegt dabei bevorzugt flächig an der Anlagefläche an. Somit kann einerseits eine definierte Anlagefläche bereitgestellt werden. Durch zudem flächige Anlage des Leuchtmittels an derselben kann es ferner ermöglicht werden, eine möglichst effiziente Wärmeabfuhr des Leuchtmittels an den Leuchtenträger zu ermöglichen.

Das Federelement kann ein Positionierelement mit einem ersten und einem zweiten Strukturabschnitt aufweisen. Diese sind bevorzugt einstückig miteinander ausgebildet. Der erste Strukturabschnitt kann mit einem dritten Strukturabschnitt des Leuchtmittels zusammenwirken, um das Leuchtmittel relativ zum Federelement zu positionieren. Der zweite Strukturabschnitt kann mit einem vierten Strukturabschnitt des Leuchtenträgers zusammenwirken, um das Federelement sowie über den ersten und den dritten Strukturabschnitt das Leuchtmittel relativ zum Leuchtenträger zu positionieren. Mittels der beschriebenen Strukturabschnitte ist es einfach möglich, die Elemente Leuchtmittel und Lichtleiter relativ zueinander zu positionieren und diese wiederum bezüglich des Leuchtenträgers definiert zu positionieren und somit insgesamt eine einfache und sichere Befestigung und Positionierung der Komponenten der länglichen Leuchte zu ermöglichen.

In einer bevorzugten Ausgestaltungsform kann das längliche Leuchtmittel wenigstens eine Durchgangsöffnung, vorzugsweise als den dritten Strukturabschnitt, aufweisen. Eine solche Durchgangsöffnung kann beispielsweise eine bekannte Bohrung bzw. Öffnung in einer Platine beispielsweise eines LED-Moduls sein. Die Anlagefläche kann eine sich entlang der Längsachse erstreckenden Nut, vorzugsweise als den vierten Strukturabschnitt, aufweisen. Diese fluchtet mit der Durchgangsöffnung. Das Federelement kann einen Vorsprung aufweisen, welcher bei dem in dem Leuchtenträger eingespanntem Federelement die Durchgangsöffnung vorzugsweise mit dem zweiten Strukturabschnitt durchgreifend in der Nut aufgenommen ist, um das Leuchtmittel vorzugsweise mit dem ersten Strukturabschnitt orthogonal zur Nut und parallel zur Erstreckungsebene definiert zu positionieren. Mittels dieser definierten Strukturausprägungen kann eine besonders einfache, intuitive Befestigungsmöglichkeit bereitgestellt werden, welche zudem eine sichere Verbindung und eindeutig definierte Ausrichtung der Bauteile ermöglicht. Insbesondere die Nutzung beispielsweise ohnehin vorgegebener Öffnungen beispielsweise in einer LED-Platine ermöglichen eine eindeutig definierte Ausrichtung und Positionierung der Bauteile zueinander.

Das Federelement kann einen Anlageschenkel aufweisen, mit welchen es sich bei in dem Leuchtenträger eingespannten Federelement an dem Leuchtmittel derart abstützt, vorzugsweise flächig abstützt, um das Leuchtmittel an die Anlagefläche zu drücken. Hierzu erstreckt sich der Anlageschenkel bei eingespanntem Federelement bevorzugt parallel zum Leuchtmitte bzw. zur Anlagefläche und stützt sich dann bevorzugt flächig an dem Leuchtmittel ab, um dieses quer zu der flächigen Erstreckung an die Anlagefläche zu drücken. Auf diese Weise kann eine sichere und wirkungsvolle Anlage des Leuchtmittels an der Anlagefläche mittels des Federelements geschaffen werden.

Das Federelement kann einen Stützschenkel aufweisen, mit welchem sich das Federelement an einem Stützbereich des Leuchtenträgers abstützt, um das Federelement, vorzugsweise den Anlageschenkel, bei in dem Leuchtenträger eingespanntem Federelement zum Drücken des Leuchtmittels an die Anlagefläche vorzuspannen. Mithin wird somit eine einfache Struktur bereitgestellt, um einerseits eine sichere Abstützung des Federelements an dem Leuchtenträger bereitzustellen, andererseits auch eine wirkungsvolle Stützkraft auf das Leuchtmittel bereitzustellen. Zudem kann die definierte Abstützung in einem definieren Stützbereich des Leuchtenträgers es ermöglichen, eine gewünschte, vordefinierte Anpresskraft bereitzustellen. Auf diese Weise können beispielsweise Beschädigungen des Leuchtmittels durch zu festes Anziehen einer Schraube, wie dies beim Stand der Technik nach wie vor zu Problemen führt, vermieden werden.

Der Anlageschenkel und der Stützschenkel können über einen Verbindungsschenkel elastisch bzw. federnd miteinander verbunden sein. Auch kann der Anlageschenkel sich insgesamt elastisch von dem Stützschenkel erstrecken. Auf diese Weise können etwaige Unebenheiten oder Toleranzen in der Fertigung des Leuchtenträgers sicher ausgeglichen werden. Zudem kann beispielsweise durch unterschiedliche Gestaltung des Federelements bzw. seines Verbindungsschenkels, je nach Anwendungsbereich, eine unterschiedlich definierte Federkraft bereitgestellt werden. Die unterschiedlich starken Federelemente könnten beispielsweise durch Verwendung unterschiedlich farbiger Kunststoffe einfach kenntlich gemacht werden.

Der Stützbereich kann sich bevorzugt entlang der Längsachse erstrecken. Besonders bevorzugt ist der Stützbereich der Anlagefläche zugewandt. Aufgrund der einander zugewandten Flächen kann somit das Federelement einfach zwischen diesen eingespannt werden. Bevorzugt ist der Stützbereich bezüglich der Hauptabstrahlrichtung (seitlich) versetzt bereitgestellt, sodass der Stützbereich nicht im Abstrahlbereich des Leuchtmittels bzw. im Positionierbereich des Lichtleiters vorgesehen ist. Grundsätzlich ist jedoch auch denkbar, dass gerade aufgrund der Struktur des Lichtleiters der Stützbereich entsprechend umführt werden kann. Der Stützbereich kann mit der Anlagefläche mit über einen sich vorzugsweise entlang der Längsachse erstreckenden Verbindungssteg des Leuchtenträgers verbunden sein. Dieser ist bevorzugt geradlinig bereitgestellt. Insofern kann die Struktur des Leuchtenträgers vereinfacht sein, während die Anlagefläche und der Stützbereich in einfacher Weise bereitgestellt sind.

Der Lichtleiter kann in Richtung der Längsachse gesehen einen geradlinigen oder gebogenen oder eckigen Querschnitt oder auch jeden sonstigen Querschnitt aufweisen. Die Erfindung ist hier nicht bezüglich einer bestimmten Ausgestaltung des Lichtleiters begrenzt, sofern dessen Einkoppelbereich dem Leuchtmittel entsprechend zugewandt ist und von diesem das Licht dann entsprechend über den Lichtleiter an definierte Positionen geführt (also insbesondere mittels Totalreflektion fortgepflanzt) werden kann, wo es dann letztlich über die Auskoppelbereiche ausgekoppelt werden kann.

Der Auskoppelbereich kann in einem flächigen oder gebogenen Abschnitt des Lichtleiters vorgesehen sein. Der Auskoppelbereich selbst kann ebenso mit dem Einkoppelbereich um einen bevorzugt gebogenen Umlenkabschnitt verbunden sein. Grundsätzlich ist jede Form eines Lichtleiters denkbar und zudem jede Positionierung eines oder mehrerer Auskoppelbereiche, sowie sie den Umständen entsprechend gewünscht sind. Der Erfindung sind somit bezüglich des Lichtleiters hier keine strukturellen, geometrischen, dimensionalen oder optischen Grenzen gesetzt.

Die längliche Leuchte kann ferner ein Optikelement aufweisen. Dabei kann es sich beispielsweise um einen Diffusor oder ein sonstiges Optikelement, insbesondere in Form einer Optikplatte, handeln. Das Optikelement kann sich bevorzugt flächig über den Lichtleiter erstrecken; mithin vorzugsweise wenigstens über eine flächige Außenseite des Lichtleiters und/oder wenigstens über dessen Auskoppelbereich. In einer bevorzugten Ausgestaltungsform können Optikelement und Lichtleiter bevorzugt als quasi zweilagiges Element bereitgestellt sein; dies integral oder aus separaten Bauteilen. Die Anzahl der Optikelemente sowie deren Position bezüglich des Lichtleiters sind durch die vorliegende Erfindung nicht begrenzt. Insofern kann der Lichtleiter auf unzählige Weise optisch weitere optimiert werden.

Der Leuchtenträger und/oder das Federelement können ferner Einspannbereiche aufweisen, um den Lichtleiter und bevorzugt ferner - soweit vorhanden - das Optikelement (seitlich; also an deren flächiger Seite anliegend) einzuspannen und definiert zu positionieren; dies vorzugsweise quer zu einer Erstreckungsfläche des Lichtleiters oder des Optikelements oder beidseits bezüglich einer Richtung orthogonal zur Nut und parallel zur Erstreckungsebene. Die Bauteile sollen derart eingespannt und definiert positioniert werden, so dass der Einkoppelbereich dem Leuchtmittel in Hauptabstrahlrichtung direkt gegenüberliegt und somit bevorzugt sicher fixiert sind. Somit kann beispielsweise ein Verschieben des Lichtleiters beispielsweise aufgrund unbeabsichtigter Stöße sicher vermieden und somit auch eine Beschädigung des Leuchtmittels verhindert werden. Die Einspannbereiche erstrecken sich bevorzugt entlang der Längsachse und sorgen somit bevorzugt für eine über die gesamte Länge gesehen sichere Positionierung.

Die Einspannbereiche können ein erstes Einspannelement vorzugsweise des Leuchtenträgers aufweisen. Dieses erstreckt sich bevorzugt parallel zur Erstreckungsebene und bevorzugt zum Federelement hin. Die Einspannbereiche können ferner ein zweites Einspannelement vorzugsweise des Federelements aufweisen. Das zweite Einspannelement kann sich bevorzugt parallel zur Erstreckungsebene und im Wesentlichen zum ersten Einspannelement hin erstrecken. Mittels der hier bevorzugt aufeinander zu sich erstreckenden Einspannelemente wird es somit in einfacher Weise ermöglicht, den Lichtleitern und bevorzugt ferner das Optikelement beidseits einzuspannen und somit sicher zu positionieren. Insbesondere das Vorsehen des zweiten Einspannelements an dem Federelement erleichtert die Befestigung und Positionierung der Bauteile zueinander weiter. So sorgt die einzelne Komponente des Federelements für eine umfangreich sichere definierte Befestigung und Positionierung der Bauteile zueinander.

Wenigstens einer der Einspannbereiche - vorzugsweise wenigstens das zweite Einspannelement - kann an seiner dem Lichtleiter zugewandten Anlageseite sich bezüglich der Längsachse derart geneigt erstrecken, so dass diese Anlageseite in Längsachse gesehen von wenigstens einer der Stirnseiten zu der jeweils anderen hin auf den Lichtleiter hin zu einem Anlagebereich der Anlageseite zur Anlage mit dem Lichtleiter zuläuft. Denkbar ist hier, dass die Anlageseite beispielsweise rampenartig oder pfeilartig zuläuft. Somit bietet der Einspannbereich und mithin bevorzugt das Federelement selbst ferner eine Anlaufschräge zum Einführen eines Lichtleiters in den Leuchtenträger in Längsachse gesehen. Im Übrigen kann, sofern das zweite Einspannelement an dem Federelement vorgesehen ist, dieses zudem beim Positionieren des Federelements helfen, in dem dieses beispielsweise als Griffteil oder Hebel zum Einführen und Positionieren des Federelements genutzt werden kann.

Das dem Optikelement zugewandte Einspannelement kann einen ersten Einspannabschnitt zur Anlage an dem Lichtleiter und einen zweiten Einspannabschnitt zur Anlage an einem Optikelement aufweisen. Das Optikelement kann dabei bevorzugt zwischen dem zweiten Einspannabschnitt und dem Lichtleiter eingespannt sein. Mittels dieser Einspannabschnitte ist es möglich, sowohl für den Lichtleiter als auch für das Optikelement eine separate Anlagefläche bereitzustellen, um diese Komponenten bezüglich des Leuchtenträgers einerseits sowie relativ zueinander andererseits definiert zu positionieren und jedes für sich sicher abzustützen. Hierzu kann beispielsweise der Lichtleiter ein Stück weiter zur Anlagefläche hin vorragen, als es das Optikelement tut. Beispielsweise könnte der erste Einspannabschnitt, welcher sich dann quer vor das Optikelement erstreckt, ferner als stirnseitige Anlage für das Optikelement dienen und somit eine Doppelfunktion erfüllen.

Der Lichtleiter und/oder das Optikelement können weiter Raststrukturen aufweisen, welche mit Raststrukturen des Leuchtenträgers oder der Einspannbereiche derart zusammenwirken, um den Einkoppelbereich relativ zum Leuchtmittel in einer Richtung orthogonal zur Anlagefläche oder parallel zur Hauptabstrahlrichtung fix zu positionieren. Dies bevorzugt wenigstens mit einem definierten Abstand in Hauptabstrahlrichtung gesehen vor dem Leuchtmittel. Somit können die Bauteile (Lichtleiter, Optikelement) bevorzugt nicht nur in ihrer Höhe bezüglich der Hauptabstrahlrichtung ausgerichtet werden. Auch ist es somit besonders bevorzugt möglich, einen Abstand des Lichtleiters bezüglich des Leuchtmittels zu definieren und somit die Bauteile relativ zueinander sicher zu positionieren, um eine Beschädigung beispielsweise der Leuchtmittel durch Anstoßen des Lichtleiters zu vermeiden. Sofern der Lichtleiter und das Optikelement in einer Art schichtweisen Aufbau bereitgestellt sind, reicht es in der Regel, einen dieser beiden Bauteile entsprechend zu fixieren bzw. zu positionieren, da aufgrund deren kombinierter Struktur das dann andere Bauteil gleichermaßen ausgerichtet und positioniert sowie befestigt wird.

Der Leuchtenträger kann ferner zwei Anlageflächen vorzugsweise jeweils mit einem entsprechenden vierten Strukturabschnitt, wie insbesondere deren Nut, aufweisen. Die Anlageflächen sind bevorzugt voneinander weg gerichtet. Jede Anlagefläche kann ein Leuchtmittel, einen Lichtleiter und ein Federelement entsprechend zugeordnet sein. Auf diese Weise kann eine längliche Leuchte bereitgestellt werden, welche in entgegengesetzter Richtung entlang der Längsachse Licht seitlich abstrahlt, welches sodann in einen Lichtleiter eingekoppelt wird, welcher dann in beliebiger Weise gestaltet werden kann. Somit kann bezüglich der Längsachse eine seitliche symmetrische Lichtabgabe ermöglicht werden.

Die Einkoppelbereiche der Lichtleiter können bevorzugt über deren Auskoppelbereich besonders bevorzugt integral miteinander verbunden sein. So kann beispielsweise der Lichtleiter einer jeden Seite seitlich nach außen und voneinander weg geführt werden und dann beispielsweise bogenförmig nach unten und zurück aufeinander zu geführt werden, um im Auskoppelbereich zusammenzulaufen. Somit kann sich beispielsweise eine insgesamt im Wesentlichen U-förmige Querschnittsform des Lichtleiters ergeben, deren am jeweiligen Ende der beiden Schenkel befindliche Einkoppelbereiche aufeinander zu gerichtet sind. Diese Form könnte man, je nach Breite des Lichtleiters im Querschnitt, auch beispielsweise als oben geschlitzte O-Form bezeichnen.

Wie bereits erwähnt, kann das Leuchtmittel beispielsweise ein LED-Modul sein. Dieses kann bevorzugt eine Platine aufweisen, auf der LEDs in Form von LED-Chips oder LED-Clustern bereitgestellt sind. Auf der Platine sind bevorzugt die LEDs in Reihe entlang der Längsachse angeordnet. Das Leuchtmittel kann mehrere bevorzugt in Reihe angeordnete Leuchtmittelelemente aufweisen. Dabei kann es sich beispielsweise um mehrere der vorbezeichneten LED-Module oder auch andere Leuchtmittel handeln. Auf diese Weise können bekannte Leuchtmittel bereitgestellt werden, welche sich besonders gut für den Einsatz in Kombination mit einem Lichtleiter eignen. Das Federelement bzw. wenigstens deren Anlageschenkel kann eine Materialstärke aufweisen, welche dicker als die Höhe des Leuchtmittels ist. Mithin also bevorzugt dicker als die Höhe der LEDs und besonders bevorzugt die Höhe der über die Platine hervorragenden Bereiche der LEDs. Auf diese Weise kann das Federelement gleichzeitig eine Schutzfunktion der Leuchtmittel bzw. LEDs erfüllen, da aufgrund des höheren Vorragens des Federelements aufgrund seiner Materialstärke ein Anstoßen beispielsweise des Lichtleiters an das Leuchtmittel bzw. die LEDs verhindert wird.

Das Federelement, vorzugsweise der Anlageschenkel, kann eine Aussparung aufweisen, um einen Lichtabgabebereich des Leuchtmittels wie vorzugsweise der LEDs freizulassen. Auf diese Weise kann eine besonders große Anlagefläche des Federelements bereitgestellt werden, ohne die Lichtabgabe des Leuchtmittels zu beeinträchtigen oder einzelne Leuchtmittel zu beschädigen.

Der Leuchtenträger ist bevorzugt als Strangpressprofil und vorzugsweise als Aluminiumstrangpressprofil gebildet. Grundsätzlich kann der Leuchtenträger aus jedem Material hergestellt sein. Insbesondere ist er aus einem Metall und besonders bevorzugt aus Aluminium hergestellt. Auch andere Herstellungsmöglichkeiten als das Strangpressen sind denkbar. Insbesondere hat das Strangpressen den Vorteil, dass beispielsweise die Anlagefläche, der vierte Strukturabschnitt, insbesondere die Nut, der Stützbereich, der Verbindungssteg, das erste Einspannelement, und/oder das zweite Einspannelement als extrudierte Kontur des Strangpressprofils einfach gebildet werden können. Somit kann mittels bekannter Herstellungsverfahren solcher Leuchtenträger in einfacher Weise bereits eine entsprechende Kontur und Struktur bereitgestellt werden, so dass die Bereitstellung der zusätzlichen einfachen Sicherungsfunktion mittels des Federelements keinen zusätzlichen Arbeitsaufwand erfordert.

Weitere Vorteile und Ausgestaltungen der vorliegenden Erfindung werden wir anhand der Figuren der begleitenden Zeichnungen im Folgenden beschrieben. Es zeigen:
- Figur 1: eine seitliche Querschnittsansicht einer länglichen Leuchte gemäß der vorliegenden Erfindung,
- Figur 2: eine Detailansicht der länglichen Leuchte gemäß Figur 1,
- Figur 3: eine perspektivische Teilschnitt-Ansicht der länglichen Leuchte gemäß Figur 1 ohne Leuchtmittel und Federelement,
- Figur 4: ein Leuchtenträger mit Leuchtmittel und Federelement einer länglichen Leuchte gemäß Figur 1 in einer perspektivischen Darstellung, und
- Figur 5: eine weitere perspektivische Darstellung der Bauteile gemäß Figur 4.

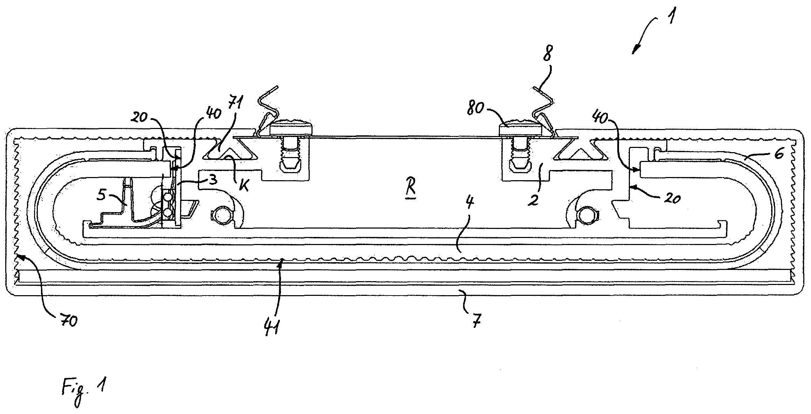

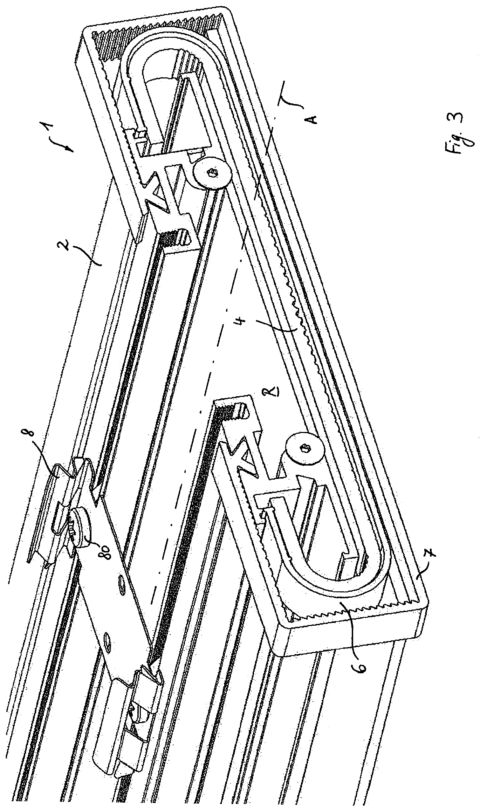

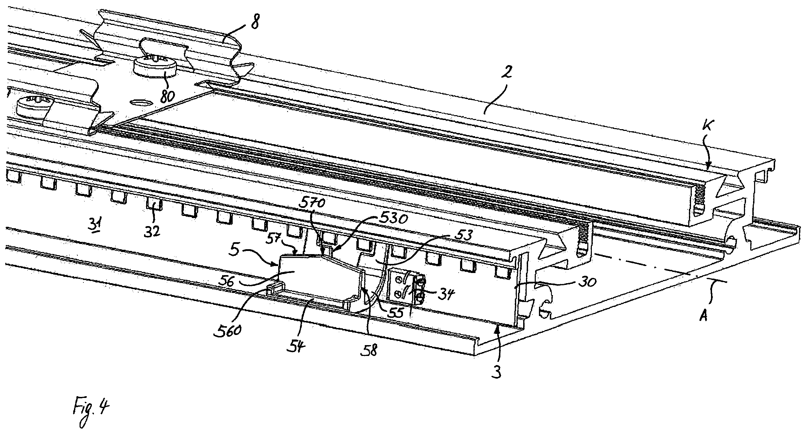

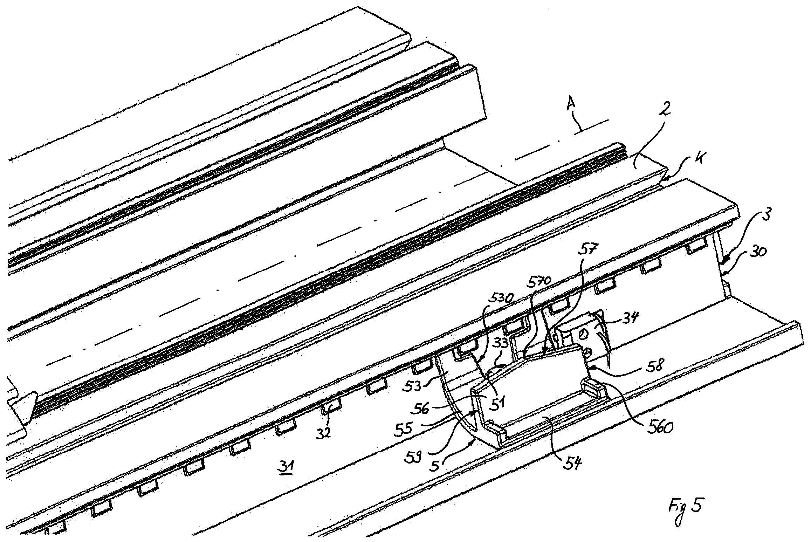

Die Figuren 1 bis 3 zeigen unterschiedliche Ansichten einer erfindungsgemäßen länglichen Leuchte 1 gemäß der vorliegenden Erfindung, und die Figuren 4 und 5 zeigen einzelne Komponenten derselben.

Die längliche Leuchte 1 weist einen länglichen Leuchtenträger 2 auf. Dieser erstreckt sich entlang einer Längsachse A, welche hier gleichzeitig die Längsachse A der länglichen Leuchte 1 bildet. Der Leuchtenträger 2 ist bevorzugt aus einem Metall, wie beispielsweise Aluminium, hergestellt. Besonders bevorzugt ist der Leuchtenträger 2 als Strangpressprofil gebildet.

Der Leuchtenträger 2 weist eine sich entlang der Längsachse A erstreckende Anlagefläche 20 auf. In dem hier dargestellten Ausführungsbeispiel weist der Leuchtenträger 2 zwei Anlageflächen 20 auf, welcher hier bevorzugt voneinander weg gerichtet sind. Die Anlageflächen 20 erstrecken sich bevorzugt im Wesentlichen in einer Erstreckungsebene flächig. Grundsätzlich sind auch andere Ausgestaltungsformen und Strukturen der Anlagefläche 20 denkbar, wie beispielsweise eine stufenförmige Form und dergleichen.

Die längliche Leuchte 1 weist ferner ein längliches Leuchtmittel 3 mit einer Hauptabstrahlrichtung H - hier quer zur länglichen Erstreckung - auf. Das Leuchtmittel 3 erstreckt sich entlang der Längsachse A, um an der Anlagefläche anzuliegen und bevorzugt flächig an dieser anzuliegen. Die Hauptabstrahlrichtung H ist hier von der Anlagefläche 20 entgegengesetzt weg gerichtet. Das Leuchtmittel 3 ist, wie in dem Ausführungsbeispiel dargestellt, bevorzugt ein LED-Modul 30. Dieses kann beispielsweise eine Platine 31 sowie hier eine Vielzahl von LEDs 32 aufweisen. Die LEDs 32 sind hier in Reihe entlang der Längsachse A angeordnet. Des Weiteren kann, wie hier dargestellt, das LED-Modul 30 weitere Komponenten aufweisen, wie beispielsweise eine Anschlussklemme 34 zum Anschluss externen Kabel zum Betrieb des Leuchtmittels 3. Das Leuchtmittel 3 kann mehrere bevorzugt in Reihe angeordnete Leuchtmittelelemente, wie beispielsweise das LED-Modul 30, aufweisen. Diese können beispielsweise unabhängig voneinander betrieben werden oder beispielsweise auch miteinander verschaltet sein.

Des Weiteren weist die längliche Leuchte 1 einen länglichen Lichtleiter 4 auf. Der Lichtleiter 4 weist einen dem Leuchtmittel 3 zugwandten und hier länglichen stirnseitigen Einkoppelbereich 40 zum Einkoppeln des von dem Leuchtmittel 3 insbesondere in Hauptabstrahlrichtung H abgegebenen Lichts. Des Weiteren weist der Lichtleiter 4 einen Auskoppelbereich 41 zur Abgabe des über den Einkoppelbereich 40 eingekoppelten Lichts nach außen; also aus dem Lichtleiter 4 heraus und bevorzugt zur Lichtabgabe bzw. Leuchtenabstrahlung nach außen. Der Lichtleiter 4 kann einteilig oder bzgl. der Längsachse A auch mehrteilig ausgebildet sein. Der Lichtleiter 4 kann in Richtung der Längsachse A gesehen einen geradlinigen oder, wie dargestellt, gebogenen oder auch eckigen oder sonst wie gestalteten Querschnitt aufweisen. Der Auskoppelbereich 41 kann, wie dargestellt, in einem flächigen Abschnitt 44 des Lichtleiters 4 vorgesehen sein. Auch ist es denkbar, den Auskoppelbereich 41 in einem gebogenen Abschnitt 43 oder einem eckigen Abschnitt oder einem sonstigen Abschnitt des Lichtleiters 4 vorzusehen, wo immer eine Lichtauskopplung erwünscht ist. Wie hier dargestellt, ist der Auskoppelbereich 41 bevorzugt mit dem Einkoppelbereich 40 über einen hier gebogenen Umlenkabschnitt 43 verbunden. In dem hier dargestellten bevorzugten Ausführungsbeispiel mit zwei Anlageflächen 20 und entsprechend zugeordneten Leuchtmitteln 3 sind bevorzugt entsprechend auch zwei Lichtleiter 4 bzw. Lichtleiterabschnitte jeweils mit Einkoppelbereich 40 bereitgestellt. Diese erstrecken sich jeweils von der Anlagefläche 20 in Hauptabstrahlrichtung H gesehen seitlich nach außen voneinander weg und werden über jeweilige Umlenkabschnitte 43 jeweils zu dem gemeinsamen Auskoppelbereich 41 hin zusammengeführt. Mithin sind also die Einkoppelbereiche 40 der Lichtleiter 4 hier über deren Auskoppelbereich 41 integral miteinander verbunden. Es wird somit ein integraler Lichtleiter 4 bereitgestellte, welcher hier eine im Wesentlichen U-förmige Ausgestaltung hat. Die oberen Enden der U-Schenkel sind dabei nach innen aufeinander zu gerichtet, um die Einkoppelbereiche 40 den Leuchtmitteln 3 jeweils zuzuwenden, um das von diesen abgestrahlte Licht in den Lichtleiter einkoppeln zu können. Der Lichtleiter 4 kann hier aufgrund der insgesamt länglichen Ausgestaltung der einzelnen Bauteile längs entlang der Längsachse A auf den Leuchtenträger 2 aufgeschoben werden. Aufgrund der hier dargestellten U-Form umgreift der Lichtleiter 4 den Leuchtenträger 2 auf seiner Unterseite und kaschiert diesen somit optisch, sodass ein insgesamt ansprechendes Erscheinungsbild gegeben ist.

Die längliche Leuchte 1 weist des Weiteren ein Federelement 5 auf. Das Federelement ist bevorzugt aus einem Kunststoff hergestellt. Das Federelement 5 ist derart ausgebildet und in dem Leuchtenträger 2 eingespannt, um das Leuchtmittel 3 an die Anlagefläche 20 zu drücken und insbesondere bezüglich des Lichtleiters 4 derart auszurichten, dass der stirnseitige Einkoppelbereich 40 dem Leuchtmittel 3 in Hauptabstrahlrichtung H gesehen gegenüberliegt, um von dem Leuchtmittel 3 in der Hauptabstrahlrichtung H abgegebenes Licht über den stirnseitigen Einkoppelbereich 40 in den Lichtleiter 4 einzukoppeln.

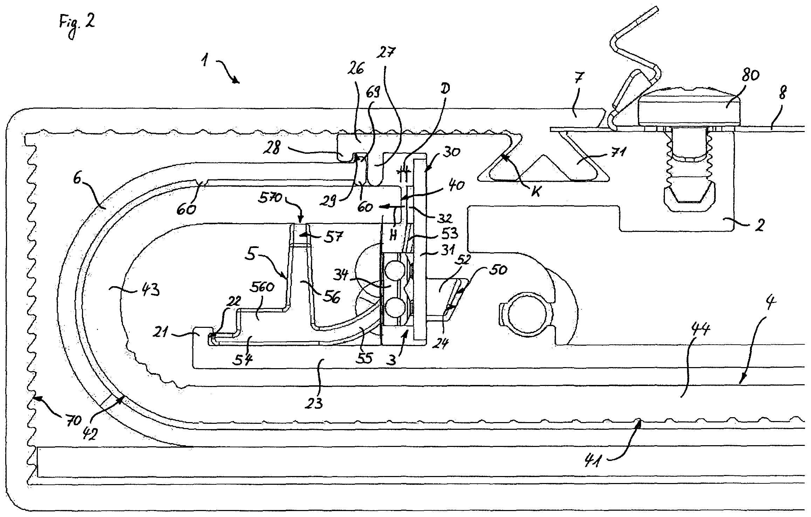

Das Federelement 5 weist hierzu bevorzugt ein Positionierelement 50 mit einem ersten Strukturabschnitt 51 und einem zweiten Strukturabschnitt 52 auf. Der erste und zweite Strukturabschnitt 51, 52 sind bevorzugt einstückig miteinander ausgebildet. In dem hier dargestellten Ausführungsbeispiel ist das Positionierelement 50 als beispielsweise stiftartiger Vorsprung des Federelements 5 bereitgestellt. Der erste Strukturabschnitt 51 wirkt, wie insbesondere der Figur 2 zu entnehmen ist, mit einem dritten Strukturabschnitt 33 des Leuchtmittels 3 zusammen. Bei diesem dritten Strukturabschnitt 33 kann es sich beispielsweise um eine hier kreisförmige Durchgangsöffnung in dem Leuchtmittle 3 bzw. der Platine 31 desselben handeln, durch die das Positionierelement 50 hindurchragt und zum Positionieren des Leuchtmittels 3 somit der in der Durchgangsöffnung 33 aufgenommene Positionierstift 50 wirkt. Somit kann das Leuchtmittel 3 relativ zum Federelement 5 positioniert werden. Der zweite Strukturabschnitt 52, welcher hier durch ein distales Ende des Positionierelements 50 gebildet ist, kann sodann mit einem vierten Strukturabschnitt 24 des Leuchtenträgers 2 zusammenwirken. In dem dargestellten Ausführungsbeispiel ist der vierte Strukturabschnitt 24 hier als sich entlang der Längsachse A erstreckende Nut des Leuchtenträgers 2 gebildet, wobei die Nut 24 bevorzugt als extrudierte Kontur des als Strangpressprofil gebildeten Leuchtenträgers 2 bereitgestellt ist. Die Durchgangsöffnung 33 fluchtet hier mit der Nut 24. So kann das Positionierelement mit dem zweiten Strukturelement 52 in die Nut 24 hineinragen. Auf diese Weise kann das Federelement 5 sowie über den ersten und den dritten Strukturabschnitt 51, 33 das Leuchtmittel 3 relativ zum Leuchtenträger 2 positioniert werden. Dies deswegen in einfacher Weise, da das Positionierelement bzw. der Vorsprung 50 bei in dem Leuchtenträger 2 eingespanntem Federelement 5 die vorbeschriebene Durchgangsöffnung 33 vorzugsweise mit dem zweiten Strukturabschnitt 52 durchgreifend in der Nut 24 aufgenommen ist, um eben das Leuchtmittel 3 vorzugsweise mit dem ersten Strukturabschnitt 51 orthogonal zur Nut 24 und parallel zur Erstreckungsebene definiert zu positionieren.

Das Federelement 5 kann, wie gezeigt, einen Anlageschenkel 53 aufweisen. Mit dem Anlageschenkel 53 kann sich das Federelement 5, wenn es in dem Leuchtenträger 2 eingespannt ist, an dem Leuchtmittel 3 derart bevorzugt abstützten, um das Leuchtmittel 3 an die Anlagefläche 20 zu drücken, wie dies beispielsweise in der Figur 2 deutlich zu erkennen ist.

Das Federelement 5 kann des Weiteren einen Stützschenkel 54 aufweisen, mit welchem sich das Federelement 5 an einem Stützbereich 21 des Leuchtenträgers 2 abstützt, um das Federelement 5 und hier insbesondere den Anlageschenkel 53 bei in dem Leuchtenträger 2 eingespannten Federelement 5 zum Drücken des Leuchtmittels 3 an die Anlagefläche 20 vorzuspannen.

Wie beispielsweis der Figur 2 und 4 zu entnehmen ist, können der Anlageschenkel 53 und der Stützschenkel 54 beispielsweise über einen Verbindungsschenkel 55 miteinander verbunden sein. Dies bevorzugt elastisch bzw. federnd, um eben die Vorspannung des Federelements 5 auf das Leuchtmittel 3 zur Anlage an die Anlagefläche 20 bereitstellen zu können.

Der vorbezeichnete Stützbereich 21 kann sich bevorzugt entlang der Längsachse A erstrecken. Wie hier dargestellt kann der Stützbereich 21 der Anlagefläche 20 zugewandt sein. Dabei ist, wie gezeigt, der Stützbereich bezüglich der Hauptabstrahlrichtung H des Leuchtmittels 3 hier nach unten versetzt, so dass der Bereich vor den Leuchtmitteln 3 in Hauptabstrahlrichtung H gesehen hier zur Führung des Lichtleiters 4 frei ist. Der Stützbereich 21 kann, wie hier dargestellt, einen Hinterschnitt 22 aufweisen, um das Federelement 5 insbesondere im eingespannten Zustand sicher in dem Leuchtenträger 2 zu halten.

Der Stützbereich 21 kann, wie beispielsweise Figur 2 zu entnehmen ist, mit der Anlagefläche 20 über einen sich vorzugsweise entlang der Längsachse A erstreckend Verbindungssteg 23 des Leuchtenträgers 2 verbunden sein. Dieser ist bevorzugt ebenso flächig ausgebildet. Somit können Stützbereich 21, Verbindungssteg 23 und Anlagefläche 20 einen Raum bzw. hier im Wesentlichen dreieckigen Schenkel zur sicheren Aufnahme des Federelements 5 bereitstellen bzw. begrenzen.

Das Federelement 5 bzw. wenigstens dessen Anlageschenkel 53 weisen bevorzugt eine Materialstärke auf, welche dicker als die Höhe des Leuchtmittels 3 und vorzugsweise dicker als die Höhe der LEDs 32 und besonders bevorzugt die Höhe der über die Platine 31 vorragenden Bereiche der LEDs 32 ist. Somit kann das Federelement 5 gleichzeitig als Schutz des Leuchtmittels 3 bzw. der LEDs 32 gegenüber mechanischen Einflüssen beispielsweise ausgehend von dem Lichtleiter 4 dienen.

Wie beispielsweise den Figuren 4 und 5 deutlich zu entnehmen ist, kann das Federelement 5 und vorzugsweise dessen Anlageschenkel 53 eine Aussparung 530 aufweisen, um hier einen Lichtabgabebereich des Leuchtmittels 3 und vorzugsweise der LEDs 32 freizulassen. Insbesondere in Kombination beispielsweise mit einer Durchgangsöffnung 33 in der Platine 31 und Hindurchstecken des Positionierelements 50 des Federelements 5 kann eine definierte Ausrichtung eben dieser Aussparung 530 automatisch ermöglicht werden, um eben den Lichtabgabebereich des Leuchtmittels 3 nicht zu behindern und zudem das Leuchtmittel 3 bzw. die LEDs 32 nicht zu beschädigen.

Wie insbesondere den Figuren 1 bis 3 zu entnehmen ist, kann die längliche Leuchte 1 ferner ein Optikelement 6, wie hier beispielsweise einen Diffusor oder jegliches andere Optikelement, aufweisen. Dieses Optikelement 6 kann sich bevorzugt, wie hier dargestellt, flächig über den Lichtleiter 4 erstrecken. In dem dargestellten Ausführungsbeispiel erstreckt sich das Optikelement 6 im Wesentlichen vollflächig über eine flächige Außenseite 42 des Lichtleiters 4 und insbesondere wenigstens über dessen Auskoppelbereich 41. Das Optikelement 6 kann bevorzugt in einem definierten Abstand von dem Lichtleiter 4 bereitgestellt sein. Hierfür kann das Optikelement 6 beispielsweise definierte Abstandsstrukturen 60 aufweisen, welche zu dem Lichtleiter 4 hin ragen und mit diesem in Anlage stehen. Ebenso wie der Lichtleiter 4, kann auch das Optikelement 6 eine längliche Form aufweisen und sich bevorzugt entlang der Längsachse A erstrecken.

An dieser Stelle sei angemerkt, dass im Rahmen der vorliegenden Erfindung unter "entlang der Längsachse erstrecken" insbesondere die Erstreckungsrichtung im Vordergrund steht, wobei die Länge/Ausdehnung der Erstreckung hierdurch nicht beschränkt sein soll; sie kann sowohl über die gesamte Länge des die Längsachse A aufweisenden Bauteils, hier bevorzugt des Leuchtenträgers 2 oder der länglichen Leuchte 1 an sich, als auch eine geringere oder größere Erstreckung bedeuten.

Wie dargestellt, können sowohl der Leuchtenträger 2 als auch das Federelement 5 Einspannbereiche 26, 56 aufweisen. Es ist jedoch auch denkbar, dass nur einer dieser beiden Bauteile die Einspannbereiche entsprechend aufweist. Die Einspannbereiche 26, 56 dienen dazu, den Lichtleiter 4 und bevorzugt ferner, sofern vorhanden, dass Optikelement 6 (beidseits) einzuspannen und definiert zu positionieren. Die definierte Positionierung soll dabei bevorzugt insbesondere quer zu einer Erstreckungsfläche des Lichtleiters 4 oder des Optikelements 6 oder beidseits bezüglich einer Richtung orthogonal zur Nut bzw. dem vierten Strukturabschnitt 24 und parallel zur Erstreckungsebene ermöglicht werden. Die Einspannbereiche 26, 56 sollen dabei den Lichtleiter 4 und bevorzugt ferner das Optikelement 6 derart einspannen und definiert positionieren, so dass der Einkoppelbereich 40 dem Leuchtmittel 3 in Hauptabstrahlrichtung H direkt - also insbesondere sicher fixiert und definiert - gegenüberliegt. Die Einspannbereiche 26, 56 erstrecken sich bevorzugt ebenso entlang der Längsachse A. Somit wird eine einfach Ausrichtung und Positionierung auch für den Lichtleiter 4 bzw. das Optikelement 6 geschaffen.

Die Einspannbereiche können, wie insbesondere der Figur 2 zu entnehmen ist, bevorzugt ein erstes Einspannelement 26 hier des Leuchtenträgers 2 aufweisen, welches sich bevorzugt parallel zur Erstreckungsebene und bevorzugt zum Federelement 5 hin erstreckt. Des Weiteren können die Einspannbereiche ein zweites Einspannelement 56 vorzugsweise des Federelements 5 aufweisen, welches sich bevorzugt parallel zur Erstreckungsebene und im Wesentlichen zum ersten Einspannelement 26 hin erstreckt, um so den Lichtleiter 4 und bevorzugt ferner das Optikelement 6 beidseits einzuspannen, wie dies insbesondere den Figuren 1 und 2 deutlich zu entnehmen ist.

Wenigstens einer der Einspannbereiche, vorzugsweise wenigstens das zweite Einspannelement 56, kann an seiner dem Lichtleiter 4 zugewandten Anlageseite 57 sich bezüglich der Längsachse A derart geneigt erstrecken, so dass diese Anlageseite 57 in Längsachse A gesehen von wenigstens einer deren Stirnseiten 58, 59 zu der jeweils anderen hin auf den Lichtleiter hin zu einem Anlagebereich 570 der Anlageseite 57 zur Anlage mit dem Lichtleiter 4 zuläuft. Wie hier dargestellt und insbesondere den Figuren 4 und 5 deutlich zu entnehmen ist, kann die Anlageseite 57 zu dem Anlagebereich 570 hin pfeilartig zu laufen. Denkbar sind auch andere Formen, wie beispielsweise ein rampenartiges Zulaufen. Insbesondere soll somit in Richtung der Längsachse A gesehen eine Anführschräge zum Einführen des Lichtleiters 4 bereitgestellt werden, wie dies beispielsweise der Figur 2 zu entnehmen ist.

Das zweite Einspannelement 56 ist hier bevorzugt integral mit dem Federelements 5 ausgebildet. Es erstreckt sich bevorzugt von dem Stützschenkel 54 hier nach oben, also insbesondere senkrecht zum Stützschenkel 54 bzw. parallel zum Anlageschenkel 53 bzw. parallel zur Anlagefläche 20. Um das Einspannelement 56 möglichst stabil bereitzustellen, kann das Federelement 5 Verstärkungsstreben 560 aufweisen, mit dem das Einspannelement 56 hier mit dem Stützschenkel 54 verbunden ist. Das Einspannelement 56 erstreckt sich hier bevorzugt derart, dass es gleichermaßen als "Griff" zum Handling (bspw. Einsetzen, Positionieren, Herausnehmen) des Federelements 5 dienen kann.

Das dem Optikelement 6 zugewandte Einspannelement 26 kann hier einen ersten Einspannabschnitt 27 zur Anlage an dem Lichtleiter 4 aufweisen. Dieses Einspannelement 26 kann des Weiteren einen zweiten Einspannabschnitt 28 zur Anlage an dem Optikelement 6 aufweisen. Das Optikelement 6 ist dabei bevorzugt zwischen dem zweiten Einspannabschnitt 28 sowie dem Lichtleiter 4 eingespannt, wie dies beispielsweise der Figur 2 deutlich zu entnehmen ist. Der erste Einspannabschnitt 27 kann, wie in den Figuren dargestellt, beispielsweise mit einer Stirnseite des Optikelements 6 zusammenwirken, um dieses definiert zu positionieren. Des Weiteren kann eines der Einspannelemente, hier das dem Optikelement zugewandte Einspannelement 26 und insbesondere der zweite Einspannabschnitt 28, einen Hinterschnitt 29 bereitstellen, welcher mit einem hier bevorzugt entlang einer Längsachse A sich erstreckenden Strukturelement hier des Optikelements 6 und wahlweise zusätzlich oder alternativ des Lichtleiters 4 zusammenwirkt, um eben dieses Element sicher in dem Leuchtenträger 2 zu halten. Mithin kann der Lichtleiter 4 und/oder das Optikelement 6 eben entsprechende Raststrukturen 69 aufweisen, welche mit Raststrukturen 29, wie beispielsweise dem Hinterschnitt 29, des Leuchtenträgers 2 oder auch der Einspannbereiche (hier 26) derart zusammenwirken, um den Einkoppelbereich 40 relativ zum Leuchtmittel 3 in einer Richtung orthogonal zur Anlagefläche 20 oder parallel zur Hauptabstrahlrichtung H fix zu positionieren; bevorzugt wenigstens mit einem definierten Abstand D in Hauptabstrahlrichtung H gesehen vor dem Leuchtmittel 3.

Die Leuchte 1 kann ferner eine Abdeckung 7 aufweisen. Diese ist bevorzugt ebenfalls als längliches Bauteil ausgebildet und weist bevorzugt einen Querschnitt auf, um die optischen Komponenten (insbesondere Lichtleiter 4, Optikelement 6, Leuchtmittel 3) zusammen mit dem Leuchtenträger 2 zu umschließen. Die Abdeckung 7 ist bevorzugt mit Haltestrukturen 71 in korrespondierenden Haltestrukturen K (bspw. extrudierte Konturen) des Leuchtenträgers 2 aufgenommen; hier bevorzugt in Längsachse A über die Haltestrukturen K auf den Leuchtenträger 2 aufgeschoben. Die Abdeckung 7 kann bevorzugt Licht-beeinflussende Strukturen 70 aufweisen.

Die Leuchte 1 kann ferner Haltelemente 8zum Befestigen der Leuchte 1 aufweisen. Die Halteelemente 8 sind hier in Form eines Federbügels ausgebildet, welcher an dem Leuchtenträger 2 hier mittels Schauben 80 befestigt ist.

In dem Leuchtenträger 2 und hier bevorzugt in dessen Mitte und ferner bevorzugt von den anderen Komponenten umgeben ist ein Raum R bereitgestellt, welcher bevorzugt elektrische oder elektronische Komponenten zum Betrieb der Leuchte 1 aufweist, wie bspw. Kabel und/oder Konverter und dergleichen.

Die vorliegende Erfindung ist durch die vorbeschriebenen Ausführungsbeispiele nicht beschränkt, sofern sie vom Gegenstand der folgenden Ansprüche umfasst ist. Insbesondere ist die Ausgestaltung und Form der einzelnen Elemente durch die vorliegende Erfindung nicht beschränkt. So sind beispielsweise hier die Leuchtmittel 3 an zwei Positionen mit entgegengesetzter Hauptabstrahlrichtung H gezeigt, welche jeweils in einen Lichtleiter bzw. einen Lichtleiterabschnitt über die jeweiligen Einkoppelbereiche 40 Licht in diesen hier integral ausgebildeten Lichtleiter 4 einstrahlen, wobei die Federelemente 5 auf jeder Seite die Leuchtmittel 3 entsprechend einspannen und dazu den Lichtleiter 4 positionieren und alle Bauteile zusammen ausrichten. Grundsätzlich ist es denkbar, dass eine beliebige Anzahl an Leuchtmitteln 3 und Lichtleitern 4 entsprechend vorgesehen sind, wobei der Lichtleiter 4 mit separaten Abschnitten/Elementen oder, wie hier, integral ausgebildet sein kann. Insbesondere die hier dargestellte integrale Ausbildung hat den Vorteil, dass ein harmonisches Erscheinungsbild der Leuchte 1 insgesamt bereitgestellt ist und die Lichtabgabe möglichst homogen erscheint. Anzahl, Art und Anordnung der Leuchtmittel 3 sind natürlich durch die vorliegende Erfindung ebenso nicht beschränkt. Ebenso wenig letztlich die Ausgestaltung des Federelements 5, sofern es seine Aufgabe der relativen Positionierung von Leuchtmittel 3 einerseits zu Lichtleiter 4 andererseits im Zusammenspiel mit dem Leuchtenträger 2 ermöglicht.

## Patentansprüche

1. Längliche Leuchte (1), aufweisend:
einen länglichen Leuchtenträger (2), welcher sich entlang einer Längsachse (A) erstreckt, wobei der Leuchtenträger (2) eine sich entlang der Längsachse (A) erstreckende Anlagefläche (20) aufweist,
ein längliches Leuchtmittel (3) mit einer Hauptabstrahlrichtung (H), wobei sich das Leuchtmittel (3) entlang der Längsachse (A) erstreckt, um an der Anlagefläche (20) anzuliegen,
einen länglichen Lichtleiter (4) mit einem dem Leuchtmittel (3) zugewandten stirnseitigen Einkoppelbereich (40) zum Einkoppeln des von dem Leuchtmittel (3) abgegebenen Lichts sowie einem Auskoppelbereich (41) zur Abgabe des über den Einkoppelbereich (40) eingekoppelten Lichts, und
ein Federelement (5), welches derart in dem Leuchtenträger (2) eingespannt ist, um das Leuchtmittel (3) an die Anlagefläche (20) zu drücken und derart auszurichten, dass der stirnseitige Einkoppelbereich (40) dem Leuchtmittel (3) in Hauptabstrahlrichtung (H) gesehen gegenüberliegt, um von dem Leuchtmittel (3) in der Hauptabstrahlrichtung (H) abgegebenes Licht über den stirnseitigen Einkoppelbereich (40) in den Lichtleiter (4) einzukoppeln,
**dadurch gekennzeichnet, dass**
die Längsachse (A), entlang derer sich der Leuchtenträger (2), die Anlagefläche (20) und das Leuchtmittel (3) erstrecken, eine Längsachse (A) der länglichen Leuchte (1) ist, und
das Federelement (5) lösbar an unterschiedlichen Stellen des Leuchtenträgers (2) einspannbar ist.

2. Längliche Leuchte (1) nach Anspruch 1, wobei sich die Anlagefläche (20) im Wesentlichen in einer Erstreckungsebene flächig erstreckt, und wobei das Leuchtmittel (3) bevorzugt flächig an der Anlagefläche (20) anliegt.

3. Längliche Leuchte (1) nach einem der vorhergehenden Ansprüche, wobei das Federelement (5) ein Positionierelement (50) mit einem ersten und einem zweiten Strukturabschnitt (51, 52) aufweist, welche bevorzugt einstückig miteinander ausgebildet sind, wobei der erste Strukturabschnitt (51) mit einem dritten Strukturabschnitt (33) des Leuchtmittels (3) zusammenwirkt, um das Leuchtmittel (3) relativ zum Federelement (5) zu positionieren, und wobei der zweite Strukturabschnitt (52) mit einem vierten Strukturabschnitt (24) des Leuchtenträgers (2) zusammenwirkt, um das Federelement (5) sowie über den ersten und den dritten Strukturabschnitt (51, 33) das Leuchtmittel (3) relativ zum Leuchtenträger (2) zu positionieren.

4. Längliche Leuchte (1) nach einem der vorhergehenden Ansprüche, wobei das längliche Leuchtmittel (3) wenigstens eine Durchgangsöffnung (33), vorzugsweise als den dritten Strukturabschnitt (33), aufweist,
wobei die Anlagefläche (20) eine sich entlang der Längsachse (A) erstreckende Nut (24), vorzugsweise als den vierten Strukturabschnitt (24), aufweist, welche mit der Durchgangsöffnung (33) fluchtet, und
wobei das Federelement (5) einen Vorsprung (50), vorzugsweise das Positionierelement (50), aufweist, welcher bei in dem Leuchtenträger (2) eingespanntem Federelement (5) die Durchgangsöffnung (33) vorzugsweise mit dem zweiten Strukturabschnitt (52) durchgreifend in der Nut (24) aufgenommen ist, um das Leuchtmittel (3) vorzugsweise mit dem ersten Strukturabschnitt (51) orthogonal zur Nut (24) und parallel zur Erstreckungsebene definiert zu positionieren.

5. Längliche Leuchte (1) nach einem der vorhergehenden Ansprüche, wobei das Federelement (5) einen Anlageschenkel (53) aufweist, mit welchem es sich bei in dem Leuchtenträger (2) eingespanntem Federelement (5) an dem Leuchtmittel (3) derart abstützt, vorzugsweise flächig abstützt, um das Leuchtmittel (3) an die Anlagefläche (20) zu drücken, und/oder
wobei das Federelement (5) einen Stützschenkel (54) aufweist, mit welchem sich das Federelement (5) an einem Stützbereich (21) des Leuchtenträgers (2) abstützt, um das Federelement (5), vorzugsweise den Anlageschenkel (53), bei in dem Leuchtenträger (2) eingespanntem Federelement (5) zum Drücken des Leuchtmittels (3) an die Anlagefläche (20) vorzuspannen,
wobei vorzugsweise der Anlageschenkel (53) und der Stützschenkel (54) über einen Verbindungsschenkel (55) miteinander elastisch verbunden sind, wobei vorzugsweise der Stützbereich (21)
• sich bevorzugt entlang der Längsachse (A) erstreckt, und/oder
• der Anlagefläche (20) zugewandten ist, und/oder
• mit der Anlagefläche (20) über einen sich vorzugsweise entlang der Längsachse (A) erstreckenden Verbindungssteg (23) des Leuchtenträgers (2) verbunden ist.

6. Längliche Leuchte (1) nach einem der vorhergehenden Ansprüche, wobei der Lichtleiter (4) in Richtung der Längsachse (A) gesehen einen geradlinigen oder gebogenen oder eckigen Querschnitt aufweist.

7. Längliche Leuchte (1) nach einem der vorhergehenden Ansprüche, wobei der Auskoppelbereich (41) in einem flächigen oder gebogenen Abschnitt (42, 43) des Lichtleiters (4) vorgesehen ist, und/oder
wobei der Auskoppelbereich (41) mit dem Einkoppelbereich (40) über einen bevorzugt gebogenen Umlenkabschnitt (43) verbunden ist.

8. Längliche Leuchte (1) nach einem der vorhergehenden Ansprüche, ferner aufweisend ein Optikelement (6), wie einen Diffusor, welches sich bevorzugt flächig über den Lichtleiter (4) erstreckt, vorzugsweise wenigstens über eine flächige Außenseite (44) des Lichtleiters (4) und/oder dessen Auskoppelbereich (41).

9. Längliche Leuchte (1) nach einem der vorhergehenden Ansprüche, wobei der Leuchtenträger (2) und/oder das Federelement (5) Einspannbereiche (26, 56) aufweisen, um den Lichtleiter (4) und bevorzugt ferner das Optikelement (6) einzuspannen und definiert zu positionieren, vorzugsweise quer zu einer Erstreckungsfläche des Lichtleiters (4) oder des Optikelements (6) oder beidseits bzgl. einer Richtung orthogonal zur Nut (24) und parallel zur Erstreckungsebene, so dass der Einkoppelbereich (40) dem Leuchtmittel (3) in Hauptabstrahlrichtung (H) direkt gegenüberliegt,
wobei sich die Einspannbereiche (26, 56) bevorzugt entlang der Längsachse (A) erstrecken.

10. Längliche Leuchte (1) nach Anspruch 9, wobei die Einspannbereiche ein erstes Einspannelement (26) vorzugsweise des Leuchtenträgers (2) aufweisen, welches sich bevorzugt parallel zur Erstreckungsebene und bevorzugt zum Federelement (5) hin erstreckt, und ein zweites Einspannelement (56) vorzugsweise des Federelements (5), welches sich bevorzugt parallel zur Erstreckungsebene und im Wesentlichen zum ersten Einspannelement (26) hin erstreckt, um den Lichtleiter (4) und bevorzugt ferner das Optikelement (6) beidseits einzuspannen, und/oder
wobei wenigstens einer der Einspannbereiche (26, 56), vorzugsweise wenigstens das zweite Einspannelement (56), an seiner dem Lichtleiter (4) zugewandten Anlageseite (57) sich bezüglich der Längsachse (A) derart geneigt erstreckt, so dass diese Anlageseite (57) in Längsachse (A) gesehen von wenigstens einer deren Stirnseiten (58, 59) zu der jeweils anderen hin auf den Lichtleiter (4) hin zu einem Anlagebereich (570) der Anlageseite (57) zur Anlage mit dem Lichtleiter (4) zuläuft, vorzugsweise rampenartig oder pfeilartig zuläuft,
wobei vorzugsweise das dem Optikelement (6) zugewandte Einspannelement (26) einen ersten Einspannabschnitt (27) zur Anlage an dem Lichtleiter (4) und einen zweiten Eispannabschnitt (28) zur Anlage an dem Optikelement (6) aufweist, wobei das Optikelement (6) weiter bevorzugt zwischen dem zweiten Einspannabschnitt (28) und dem Lichtleiter (4) eingespannt ist.

11. Längliche Leuchte (1) nach einem der vorhergehenden Ansprüche, wobei der Lichtleiter (4) und/oder das Optikelement (6) Raststrukturen (69) aufweist, welche mit Raststrukturen (29) des Leuchtenträgers (2) oder der Einspannbereiche (26, 56) derart zusammenwirken, um den Einkoppelbereich (40) relativ zum Leuchtmittel (3) in einer Richtung orthogonal zur Anlagefläche (20) oder parallel zur Hauptabstrahlrichtung (H) fix zu positionieren, bevorzugt wenigstens mit einem definierten Abstand (D) in Hauptabstrahlrichtung (H) gesehen vor dem Leuchtmittel (3).

12. Längliche Leuchte (1) nach einem der vorhergehenden Ansprüche, wobei der Leuchtenträger (2) zwei Anlageflächen (20), vorzugsweise jeweils mit einem entsprechenden vierten Strukturabschnitt (24) wie insbesondere der Nut, aufweist, wobei die Anlageflächen (20) bevorzugt voneinander weg gerichtet sind, wobei jeder Anlagefläche (20) ein Leuchtmittel (3), ein Lichtleiter (4) und ein Federelement (5) entsprechend zugeordnet sind,
wobei vorzugsweise die Einkoppelbereiche (40) der Lichtleiter (4) bevorzugt über deren Auskoppelbereich (41) bevorzugt integral miteinander verbunden sind.

13. Längliche Leuchte (1) nach einem der vorhergehenden Ansprüche, wobei das Leuchtmittel (3) ein LED-Modul (30) vorzugsweise mit auf einer Platine (31) bevorzugt in Reihe entlang der Längsachse (A) angeordneten LEDs (32) aufweist, und/oder
wobei das Leuchtmittel (3) mehrere bevorzugt in Reihe angeordnete Leuchtmittelelemente (30) aufweist.

14. Längliche Leuchte (1) nach einem der vorhergehenden Ansprüche, wobei das Federelement (5), wenigstens dessen Anlageschenkel (53), wenn vorhanden, eine Materialstärke aufweist, welche dicker als die Höhe des Leuchtmittels (3) ist, vorzugsweise der LEDs (32) und besonders bevorzugt die Höhe der über die Platine (31) vorragenden Bereiche der LEDs (32), und/oder wobei das Federelement (5), vorzugsweise der Anlageschenkel (53), wenn vorhanden, eine Aussparung (530) aufweist, um einen Lichtabgabebereich des Leuchtmittels (3), vorzugsweise die LEDs (32), freizulassen.

15. Längliche Leuchte (1) nach einem der vorhergehenden Ansprüche, wobei der Leuchtenträger (2) als Strangpressprofil, vorzugsweise als AluminiumStrangpressprofil, gebildet ist,
wobei, wenn vorhanden, vorzugsweise die Anlagefläche (20), der vierte Strukturabschnitt (24), insbesondere die Nut, der Stützbereich (21), der Verbindungssteg (23), das erste Einspannelement (27), und/oder das zweite Einspannelement (28) als extrudierte Kontur des Strangpressprofils gebildet sind.

## Claims

1. Elongate luminaire (1) comprising:
an elongate luminaire support (2) which extends along a longitudinal axis (A), the luminaire support (2) having a contact surface (20) extending along the longitudinal axis (A),
an elongate lamp (3) having a main emission direction (H), the lamp (3) extending along the longitudinal axis (A) in order to bear against the contact surface (20),
an elongate light guide (4) having a frontal coupling region (40) facing the lamp (3) for coupling in the light emitted by the lamp (3) and a decoupling region (41) for emitting the light coupled in via the coupling region (40), and
a spring element (5) which is clamped in the luminaire support (2) in such a way as to press the lamp (3) against the contact surface (20) and to align it in such a way that the frontal coupling region (40) is opposite the lamp (3) when viewed in the main emission direction (H), in order to couple in light emitted by the lamp (3) in the main emission direction (H) into the light guide (4) via the frontal coupling region (40),
**characterized in that**
the longitudinal axis (A) along which the luminaire support (2), the contact surface (20) and the lamp (3) extend is a longitudinal axis (A) of the elongate luminaire (1), and
the spring element (5) can be releasably clamped at different points on the luminaire support (2).

2. Elongate luminaire (1) according to claim 1, wherein the contact surface (20) extends substantially flat in an extension plane, and wherein the lamp (3) preferably bears flat against the contact surface (20).

3. Elongate luminaire (1) according to either of the preceding claims, wherein the spring element (5) has a positioning element (50) that has a first and a second structural portion (51, 52), which are preferably integral with one another, wherein the first structural portion (51) interacts with a third structural portion (33) of the lamp (3) in order to position the lamp (3) relative to the spring element (5), and wherein the second structural portion (52) interacts with a fourth structural portion (24) of the luminaire support (2) in order to position the spring element (5) and, via the first and the third structural portion (51, 33), the lamp (3) relative to the luminaire support (2).

4. Elongate luminaire (1) according to any of the preceding claims, wherein the elongate lamp (3) has at least one through-opening (33), preferably as the third structural portion (33),
wherein the contact surface (20) has a groove (24) extending along the longitudinal axis (A), preferably as the fourth structural portion (24), which is aligned with the through-opening (33), and
wherein the spring element (5) has a projection (50), preferably the positioning element (50), which, when the spring element (5) is clamped in the luminaire support (2), is received in the groove (24) so as to pass through the through-opening (33), preferably with the second structural portion (52), in order to position the lamp (3) in a defined manner, preferably with the first structural portion (51), orthogonal to the groove (24) and parallel to the extension plane.

5. Elongate luminaire (1) according to any of the preceding claims, wherein the spring element (5) has a contact leg (53) with which it is supported, preferably flatly supported, on the lamp (3) when the spring element (5) is clamped in the luminaire support (2) in such a way as to press the lamp (3) against the contact surface (20), and/or
wherein the spring element (5) has a support leg (54) with which the spring element (5) is supported on a support region (21) of the luminaire support (2) in order to pretension the spring element (5), preferably the contact leg (53), when the spring element (5) is clamped in the luminaire support (2) in order to press the lamp (3) against the contact surface (20),
wherein preferably the contact leg (53) and the support leg (54) are elastically interconnected via a connecting leg (55),
wherein preferably the support region (21)
• preferably extends along the longitudinal axis (A), and/or
• faces the contact surface (20), and/or
• is connected to the contact surface (20) via a connecting web (23) of the luminaire support (2) which preferably extends along the longitudinal axis (A).

6. Elongate luminaire (1) according to any of the preceding claims, wherein the light guide (4) has a straight or curved or angular cross-section when viewed in the direction of the longitudinal axis (A).

7. Elongate luminaire (1) according to any of the preceding claims, wherein the decoupling region (41) is provided in a flat or curved portion (42, 43) of the light guide (4), and/or
wherein the decoupling region (41) is connected to the coupling region (40) via a preferably curved deflection portion (43).

8. Elongate luminaire (1) according to any of the preceding claims, further comprising an optical element (6), such as a diffuser, which preferably extends flatly over the light guide (4), preferably at least over a flat outer side (44) of the light guide (4) and/or the decoupling region (41) thereof.

9. Elongate luminaire (1) according to any of the preceding claims, wherein the luminaire support (2) and/or the spring element (5) have clamping regions (26, 56) in order to clamp the light guide (4) and preferably also the optical element (6) and to position them in a defined manner, preferably transversely to an extension surface of the light guide (4) or the optical element (6) or on both sides with respect to a direction orthogonal to the groove (24) and parallel to the extension plane, so that the coupling region (40) is directly opposite the lamp (3) in the main emission direction (H),
wherein the clamping regions (26, 56) preferably extend along the longitudinal axis (A).

10. Elongate luminaire (1) according to claim 9, wherein the clamping regions comprise a first clamping element (26), preferably of the luminaire support (2), which preferably extends in parallel with the extension plane and preferably towards the spring element (5), and a second clamping element (56), preferably of the spring element (5), which preferably extends in parallel with the extension plane and substantially towards the first clamping element (26), in order to clamp the light guide (4) and preferably also the optical element (6) on both sides, and/or
wherein at least one of the clamping regions (26, 56), preferably at least the second clamping element (56), extends on the contact side (57) thereof facing the light guide (4) at an angle with respect to the longitudinal axis (A) such that this contact side (57), when viewed in the longitudinal axis (A), runs from at least one of the front sides (58, 59) thereof to the other towards the light guide (4) to a contact region (570) of the contact side (57) for contact with the light guide (4), preferably in a ramp-like or arrow-like manner,
wherein preferably the clamping element (26) facing the optical element (6) has a first clamping portion (27) for contact with the light guide (4) and a second clamping portion (28) for contact with the optical element (6), wherein the optical element (6) is further preferably clamped between the second clamping portion (28) and the light guide (4).

11. Elongate luminaire (1) according to any of the preceding claims, wherein the light guide (4) and/or the optical element (6) has latching structures (69) which interact with latching structures (29) of the luminaire support (2) or of the clamping regions (26, 56) in such a way as to fix the coupling region (40) relative to the lamp (3) in a direction orthogonal to the contact surface (20) or parallel to the main emission direction (H), preferably at least at a defined distance (D) in front of the lamp (3) when viewed in the main emission direction (H).

12. Elongate luminaire (1) according to any of the preceding claims, wherein the luminaire support (2) has two contact surfaces (20), preferably each having a corresponding fourth structural portion (24), such as in particular the groove, wherein the contact surfaces (20) are preferably directed away from one another, wherein each contact surface (20) is correspondingly assigned a lamp (3), a light guide (4) and a spring element (5),
wherein the coupling regions (40) of the light guides (4) are preferably integrally interconnected via the decoupling region (41) thereof.

13. Elongate luminaire (1) according to any of the preceding claims, wherein the lamp (3) comprises an LED module (30), preferably having LEDs (32) arranged on a circuit board (31), preferably in series along the longitudinal axis (A), and/or
wherein the lamp (3) has a plurality of lamp elements (30) preferably arranged in series.

14. Elongate luminaire (1) according to any of the preceding claims, wherein the spring element (5), at least the contact leg (53) thereof, if present, has a material thickness which is thicker than the height of the lamp (3), preferably of the LEDs (32) and particularly preferably the height of the regions of the LEDs (32) projecting beyond the circuit board (31), and/or
wherein the spring element (5), preferably the contact leg (53), if present, has a recess (530) in order to leave a light-emitting region of the lamp (3), preferably the LEDs (32), open.

15. Elongate luminaire (1) according to any of the preceding claims, wherein the luminaire support (2) is formed as an extruded profile, preferably as an aluminum extruded profile, wherein,
if present, preferably the contact surface (20), the fourth structural portion (24), in particular the groove, the support region (21), the connecting web (23), the first clamping element (27), and/or the second clamping element (28) are formed as an extruded contour of the extruded profile.

## Revendications

1. Luminaire (1) allongé présentant :
un support de luminaire (2) allongé qui s'étend le long d'un axe longitudinal (A), dans lequel le support de luminaire (2) présente une surface d'appui (20) qui s'étend le long de l'axe longitudinal (A),
un moyen d'éclairage (3) allongé comportant une direction de rayonnement principale (H), dans lequel le moyen d'éclairage (3) s'étend le long de l'axe longitudinal (A) pour venir en appui contre la surface d'appui (20),
un guide de lumière (4) allongé comportant une zone de couplage (40) côté frontal tournée vers le moyen d'éclairage (3) pour le couplage de la lumière émise par le moyen d'éclairage (3) ainsi qu'une zone de découplage (41) pour l'émission de la lumière couplée par l'intermédiaire de la zone de couplage (40), et
un élément de ressort (5) qui est serré dans le support de luminaire (2) de manière à presser le moyen d'éclairage (3) contre la surface d'appui (20) et à l'orienter de telle sorte que la zone de couplage (40) côté frontal soit opposée au moyen d'éclairage (3) vue dans la direction de rayonnement principale (H), afin de coupler la lumière émise par le moyen d'éclairage (3) dans la direction de rayonnement principale (H) dans le guide de lumière (4) par l'intermédiaire de la zone de couplage (40) côté frontal,
**caractérisé en ce que**
l'axe longitudinal (A), le long duquel s'étendent le support de luminaire (2), la surface d'appui (20) et le moyen d'éclairage (3), est un axe longitudinal (A) du luminaire (1) allongé, et
l'élément de ressort (5) peut être serré de manière amovible à différents endroits du support de luminaire (2).

2. Luminaire (1) allongé selon la revendication 1, dans lequel la surface d'appui (20) s'étend sensiblement à plat dans un plan d'extension, et dans lequel le moyen d'éclairage (3) s'appuie de préférence à plat contre la surface d'appui (20).

3. Luminaire (1) allongé selon l'une des revendications précédentes, dans lequel l'élément de ressort (5) présente un élément de positionnement (50) comportant une première et une deuxième section structurelle (51, 52), qui sont de préférence réalisées d'une seule pièce l'une avec l'autre, dans lequel la première section structurelle (51) coopère avec une troisième section structurelle (33) du moyen d'éclairage (3), pour positionner le moyen d'éclairage (3) par rapport à l'élément de ressort (5), et dans lequel la deuxième section structurelle (52) coopère avec une quatrième section structurelle (24) du support de luminaire (2) pour positionner l'élément de ressort (5) ainsi que, par l'intermédiaire de la première et de la troisième section structurelle (51, 33), le moyen d'éclairage (3) par rapport au support de luminaire (2).

4. Luminaire (1) allongé selon l'une des revendications précédentes, dans lequel le moyen d'éclairage (3) allongé présente au moins une ouverture traversante (33), de préférence sous la forme de la troisième section structurelle (33),
dans lequel la surface d'appui (20) présente une rainure (24) s'étendant le long de l'axe longitudinal (A), de préférence sous la forme de la quatrième section structurelle (24), qui est affleurante avec l'ouverture de passage (33), et
dans lequel l'élément de ressort (5) présente une saillie (50), de préférence l'élément de positionnement (50), qui, lorsque l'élément de ressort (5) est serré dans le support de luminaire (2), est reçu dans la rainure (24) en traversant l'ouverture de passage (33) de préférence avec la deuxième section structurelle (52), afin de positionner de manière définie le moyen d'éclairage (3) de préférence avec la première section structurelle (51) orthogonale à la rainure (24) et parallèle au plan d'extension.

5. Luminaire (1) allongé selon l'une des revendications précédentes, dans lequel l'élément de ressort (5) présente une branche d'appui (53) par laquelle il est soutenu, de préférence en surface, sur le moyen d'éclairage (3) lorsque l'élément de ressort (5) est serré dans le support de luminaire (2), de manière à presser le moyen d'éclairage (3) contre la surface d'appui (20), et/ou
dans lequel l'élément de ressort (5) présente une branche de soutien (54) avec laquelle l'élément de ressort (5) est soutenu sur une zone de soutien (21) du support de luminaire (2), afin de précontraindre l'élément de ressort (5), de préférence la branche d'appui (53), lorsque l'élément de ressort (5) est serré dans le support de luminaire (2), pour la pression du moyen d'éclairage (3) contre la surface d'appui (20),
dans lequel la branche d'appui (53) et la branche de soutien (54) sont de préférence reliées élastiquement entre elles par l'intermédiaire d'une branche de liaison (55),
dans lequel, de préférence, la zone de soutien (21)
• s'étend de préférence le long de l'axe longitudinal (A), et/ou
• est tournée vers la surface d'appui (20), et/ou
• est reliée à la surface d'appui (20) par l'intermédiaire d'une barrette de liaison (23) du support de luminaire (2) s'étendant de préférence le long de l'axe longitudinal (A).

6. Luminaire (1) allongé selon l'une des revendications précédentes, dans lequel le guide de lumière (4) présente, vu dans la direction de l'axe longitudinal (A), une section transversale rectiligne ou incurvée ou anguleuse.

7. Luminaire (1) allongé selon l'une des revendications précédentes, dans lequel la zone de découplage (41) est prévue dans une section plate ou incurvée (42, 43) du guide de lumière (4), et/ou
dans lequel la zone de découplage (41) est reliée à la zone de couplage (40) par l'intermédiaire d'une section de renvoi (43) de préférence incurvée.

8. Luminaire (1) allongé selon l'une des revendications précédentes, présentant en outre un élément optique (6), tel qu'un diffuseur, qui s'étend de préférence à plat sur le guide de lumière (4), de préférence au moins sur un côté extérieur (44) plat du guide de lumière (4) et/ou sur sa zone de découplage (41).

9. Luminaire (1) allongé selon l'une des revendications précédentes, dans lequel le support de luminaire (2) et/ou l'élément de ressort (5) présentent des zones de serrage (26, 56) pour serrer et positionner de manière définie le guide de lumière (4) et de préférence en outre l'élément optique (6), de préférence transversalement à une surface d'extension du guide de lumière (4) ou de l'élément optique (6) ou des deux côtés par rapport à une direction orthogonale à la rainure (24) et parallèle au plan d'extension, de sorte que la zone de couplage (40) se trouve directement en face du moyen d'éclairage (3) dans la direction de rayonnement principale (H),
dans lequel les zones de serrage (26, 56) s'étendent de préférence le long de l'axe longitudinal (A).

10. Luminaire (1) allongé selon la revendication 9, dans lequel les zones de serrage présentent un premier élément de serrage (26), de préférence du support de luminaire (2), qui s'étend de préférence parallèlement au plan d'extension et de préférence vers l'élément de ressort (5), et un second élément de serrage (56), de préférence de l'élément de ressort (5), qui s'étend de préférence parallèlement au plan d'extension et essentiellement vers le premier élément de serrage (26), afin de serrer le guide de lumière (4) et de préférence en outre l'élément optique (6) des deux côtés, et/ou
dans lequel au moins une des zones de serrage (26, 56), de préférence au moins le second élément de serrage (56), s'étend sur son côté d'appui (57) tourné vers le guide de lumière (4) de manière inclinée par rapport à l'axe longitudinal (A), de sorte que ledit côté d'appui (57), vu dans l'axe longitudinal (A), se dirige, de préférence à la manière d'une rampe ou d'une flèche, depuis au moins l'un de ses côtés frontaux (58, 59) vers l'autre côté respectif, en direction du guide de lumière (4), vers une zone d'appui (570) du côté d'appui (57) pour l'appui avec le guide de lumière (4),
dans lequel l'élément de serrage (26) tourné vers l'élément optique (6) présente de préférence une première section de serrage (27) destinée à s'appuyer contre le guide de lumière (4) et une seconde section de serrage de glace (28) destinée à s'appuyer contre l'élément optique (6), dans lequel l'élément optique (6) est en outre serré de préférence entre la seconde section de serrage (28) et le guide de lumière (4).

11. Luminaire (1) allongé selon l'une des revendications précédentes, dans lequel le guide de lumière (4) et/ou l'élément optique (6) présentent des structures d'encliquetage (69) qui coopèrent avec des structures d'encliquetage (29) du support de luminaire (2) ou des zones de serrage (26, 56) de manière à positionner de manière fixe la zone de couplage (40) par rapport au moyen d'éclairage (3) dans une direction orthogonale à la surface d'appui (20) ou parallèle à la direction de rayonnement principale (H), de préférence au moins à une distance définie (D) devant le moyen d'éclairage (3), vu dans la direction de rayonnement principale (H).

12. Luminaire (1) allongé selon l'une des revendications précédentes, dans lequel le support de luminaire (2) présente deux surfaces d'appui (20), de préférence respectivement comportant une quatrième section structurelle (24) correspondante, telle que la rainure en particulier, dans lequel les surfaces d'appui (20) sont de préférence orientées à l'opposé l'une de l'autre, dans lequel un moyen d'éclairage (3), un guide de lumière (4) et un élément de ressort (5) sont respectivement associés à chaque surface d'appui (20),
dans lequel de préférence les zones de couplage (40) des guides de lumière (4) sont de préférence reliées entre elles de préférence de manière intégrale par l'intermédiaire de leur zone de découplage (41).

13. Luminaire (1) allongé selon l'une des revendications précédentes, dans lequel le moyen d'éclairage (3) présente un module à DEL (30), de préférence comportant des DEL (32) disposées sur une carte (31), de préférence en série le long de l'axe longitudinal (A), et/ou
dans lequel le moyen d'éclairage (3) présente plusieurs éléments de moyen d'éclairage (30) disposés de préférence en série.

14. Luminaire (1) allongé selon l'une des revendications précédentes, dans lequel l'élément de ressort (5), au moins sa branche d'appui (53), si elle est présente, présente une épaisseur de matériau qui est plus épaisse que la hauteur du moyen d'éclairage (3), de préférence des DEL (32) et de manière particulièrement préférée la hauteur des zones des DEL (32) qui font saillie au-dessus de la carte (31), et/ou
dans lequel l'élément de ressort (5), de préférence la branche d'appui (53), si elle est présente, présente un évidement (530) pour laisser libre une zone d'émission de lumière du moyen d'éclairage (3), de préférence les DEL (32).

15. Luminaire (1) allongé selon l'une des revendications précédentes, dans lequel le support de luminaire (2) est formé comme un profilé extrudé, de préférence comme un profilé extrudé en aluminium, dans lequel,
s'ils sont présents, de préférence la surface d'appui (20), la quatrième section structurelle (24), en particulier la rainure, la zone de soutien (21), la barrette de liaison (23), le premier élément de serrage (27), et/ou le second élément de serrage (28) sont formés comme contour extrudé du profilé extrudé.
